# EUROPÄISCHE PATENTSCHRIFT

(11) **EP 1 058 635 B1**
(45) Veröffentlichungstag und Bekanntmachung des Hinweises auf die Patenterteilung: **27.02.2002**
(21) Anmeldenummer: 98966648.2
(22) Anmeldetag: 18.12.1998
(51) Int. Cl.: B60R 22/34

(54) **GURTAUFROLLER FÜR EINEN FAHRZEUGINSASSEN-SICHERHEITSGURT**
BELT WINDER FOR A VEHICLE OCCUPANT SEAT BELT
ENROULEUR DE CEINTURE POUR CEINTURE DE SECURITE POUR PASSAGER D'UN VEHICULE

(30) Priorität: 23.02.1998 DE 29803178 U
(43) Veröffentlichungstag der Anmeldung: 13.12.2000
(73) Patentinhaber: TRW Occupant Restraint Systems GmbH & Co. KG, 73551 Alfdorf (DE)
(72) Erfinder: STEGMEIER, Michael, D-73557 Mutlangen (DE)
(74) Vertreter: Sties, Jochen, Dipl.-Ing.
(86) Internationale Anmeldenummer: EP9808351
(87) Internationale Veröffentlichungsnummer: WO9942343

(56) Entgegenhaltungen:
- WO-A-97/49583
- DE-A- 2 222 742
- DE-A- 2 844 028
- DE-A- 19 653 510
- DE-U- 29 513 942

## Beschreibung

Die Erfindung betrifft einen Gurtaufroller für einen Fahrzeuginsassen-Sicherheitsgurt, mit einer in einem Gehäuse drehbar gelagerten Gurtspule, einem Torsionsstab, der sich im Inneren der Gurtspule erstreckt, mit seinem ersten axialen Ende drehfest mit der Gurtspule und mit seinem zweiten axialen Ende drehfest mit einer Sperrscheibe verbunden ist, und mit einer Sperrverzahnung sowie einer lasttragenden Sperrklinke, die zum Blockieren der Gurtspule in die Sperrverzahnung einsteuerbar ist, wobei der Torsionsstab einen ersten Abschnitt sowie einen zweiten Abschnitt aufweist, dessen Querschnitt kleiner als derjenige des ersten Abschnittes ist, wobei zwischen dem ersten und dem zweiten Abschnitt ein Arretierbereich ausgebildet ist und wobei ein Überbrückungselement vorgesehen ist, das von einer den zweiten Abschnitt des Torsionsstabes überbrückenden Ausgangsstellung in eine Freigabestellung überführt werden kann, in der der zweite Abschnitt des Torsionsstabes freigegeben ist.

Ein solcher Gurtaufroller ist aus der WO-A-97/49583 bekannt. Der Torsionsstab im Inneren der Gurtspule dient dazu, die maximal im Sicherheitsgurt wirkende Kraft insbesondere bei einem Unfall des Fahrzeugs auf ein Maß zu begrenzen, das Verletzungen eines zurückgehaltenen Fahrzeuginsassen ausschließt. Die Begrenzung der Kraft wird dadurch erzielt, daß ab einer gewissen Gurtbandkraft eine Verdrehung der Gurtspule relativ zur drehfest gehaltenen Sperrscheibe ermöglicht wird, wodurch eine gewisse Gurtbandlänge von der Gurtspule abgezogen werden kann. Diese abgezogene Gurtbandlänge steht als zusätzliche Strecke zur Verzögerung insbesondere des Oberkörpers des Fahrzeuginsassen zur Verfügung.

Das Verletzungsrisiko für einen Fahrzeuginsassen wird hinsichtlich des Oberkörpers nahezu ausschließlich von der Gesamtkraft bestimmt, die auf den Oberkörper einwirkt. Wenn zum Zurückhalten des Fahrzeuginsassen nur der Sicherheitsgurt verwendet wird, entspringt die auf den Oberkörper einwirkende Kraft ausschließlich aus der Kraft im Gurtband. Wird jedoch zusätzlich ein Gassack verwendet, der bei einem Unfall vor dem Fahrzeuginsassen entfaltet wird, um ein kontrolliertes Verzögern des Fahrzeuginsassen zu gewährleisten, setzt sich die Belastung des Oberkörpers ab einer gewissen Vorverlagerung zusammen aus der vom Sicherheitsgurt in den Oberkörper eingeleiteten Kraft sowie der vom Gassack in den Oberkörper eingeleiteten Kraft. Damit die auf den Oberkörper wirkende Gesamtbelastung ein vorbestimmtes Maß nicht überschreitet, wäre es wünschenswert, daß die im Sicherheitsgurt wirkende Kraft sich ab dem Zeitpunkt vermindert, an dem der Oberkörper des Fahrzeuginsassen mit dem Gassack in Berührung gelangt. Vorzugsweise sollte die Änderung der einem Gurtbandabzug entgegenwirkenden Kraft auf möglichst einfache Weise hervorgerufen werden können. Wünschenswert ist weiterhin, daß die Kennlinie von Gurtbandabzugskraft über freigegebener Gurtbandlänge in weiten Bereichen frei eingestellt werden kann, so daß der Gurtaufroller an die jeweiligen Einbauverhältnisse im Fahrzeug angepaßt werden kann.

Bei dem aus der eingangs genannten Druckschrift bekannten Gurtaufroller wird das Überbrückungselement mittels eines außerhalb der Gurtspule angeordneten Hebelmechanismus verstellt, um von einem Zustand mit hohem Kraftbegrenzungsniveau, in welchem nur ein Abschnitt des Torsionsstabes an der Kraftbegrenzung beteiligt ist, zu einem Zustand mit niedrigerem Kraftbegrenzungsniveau zu gelangen, in welchem der gesamten Torsionsstabe an der Kraftbegrenzung beteiligt ist.

Die Aufgabe der Erfindung besteht darin, einen Gurtaufroller zu schaffen, bei dem die Kennlinie von Gurtbandabzugskraft über abgezogener Gurtbandlänge ohne eine aufwendige, selektiv zu betätigende Verstellvorrichtung variiert werden kann.

Zur Lösung dieser Aufgabe ist bei einem Gurtaufroller der eingangs genannten Art gemäß einem ersten Aspekt vorgesehen, daß auf dem ersten axialen Ende des Torsionsstabes drehfest eine Stellhülse angeordnet ist, die eine dem zweiten axialen Ende des Torsionsstabes zugewandte Stirnseite aufweist, die als Steuerkurve ausgebildet ist, an der die dem ersten axialen Ende des Torsionsstabes zugewandte Stirnseite der Überbrückungshülse anliegt. Bei dieser Gestaltung wird die Verdrehung des Arretierbereichs relativ zum ersten axialen Ende des Torsionsstabes unmittelbar ausgenutzt, um die Überbrückungshülse aus der Ausgangsstellung in die Freigabestellung zu überführen. In der Ausgangsstellung erfolgt die Gurtbandfreigabe zunächst nur unter Verdrehung des ersten Abschnittes des Torsionsstabes; der zweite Abschnitt des Torsionsstabes ist an der Verdrehung nicht beteiligt, da er vom Überbrückungselement überbrückt wird. Durch geeignete Ausgestaltung der Steuerkurve läßt sich einstellen, ab welcher Verdrehung des ersten axialen Endes des Torsionsstabes relativ zum Arretierbereich auch der zweite Abschnitt des Torsionsstabes an der Verdrehung der Gurtspule beteiligt wird. Da der zweite Abschnitt einen kleineren Querschnitt aufweist als der erste Abschnitt, ist dann eine geringere Gurtbandabzugskraft erforderlich. Eine Beschränkung liegt nur dahingehend vor, daß die Freigabestellung spätestens nach einer Umdrehung des Arretierbereichs relativ zum ersten axialen Ende des Torsionsstabes erreicht werden muß. Der Zeitpunkt des Überführens des Überbrückungselements von der Ausgangsstellung in die Freigabestellung ist vorzugsweise so gewählt, daß er mit dem Beginn des Eintauchens des Oberkörpers des Fahrzeuginsassens in den entfalteten Gassack zusammenfällt.

Zur Lösung der oben genannten Aufgabe ist bei einem Gurtaufroller der eingangs genannten Art gemäß einem zweiten Aspekt der Erfindung vorgesehen, daß an dem Überbrückungselement ein Gewinde ausgebildet ist, in das ein Gegenstück derart eingreift, daß ein Überführen des Überbrückungselements aus der Ausgangsstellung in die Freigabestellung möglich ist. Bei dieser Gestaltung läßt sich in Abhängigkeit von der Gewindesteigung der Zeitpunkt, zu dem das Überbrückungselement in die Freigabestellung überführt wird, auf ein beliebiges Maß von Relativdrehung zwischen dem Arretierbereich und dem ersten axialen Ende des Torsionsstabes einstellen, insbesondere auf mehr als eine Umdrehung der Gurtspule.

Gemäß einer bevorzugten Ausführungsform ist vorgesehen, daß der Arretierbereich und das zweite axiale Ende des Torsionsstabes mit einem Vielnut- oder Keilzahnprofil versehen sind und daß das Überbrückungselement eine Überbrückungshülse ist, die in ihrem Inneren mit einem komplementären Vielnut bzw. Keilzahnprofil versehen ist. Bei dieser Ausführungsform ist das Überbrückungselement als besonders einfach herzustellende Hülse ausgebildet, die auf dem Arretierbereich und dem zweiten axialen Ende des Torsionsstabes verschiebbar angeordnet ist.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den Zeichnungen dargestellt ist. In diesem zeigen:
- Figur 1 schematisch einen Gurtaufroller für einen Fahrzeuginsassen-Sicherheitsgurt;
- Figur 2 schematisch in einem Querschnitt eine Gurtspule mit Torsionsstab für einen erfindungsgemäßen Gurtaufroller;
- Figur 3 abgewickelt eine Stellhülse, die beim erfindungsgemäßen Gurtaufroller verwendet werden kann;
- Figur 4 abgewickelt eine Überbrückungshülse, die bei einem erfindungsgemäßen Gurtaufroller verwendet werden kann; und
- Figur 5 ein Diagramm, in welchem der Verlauf der Gurtbandabzugskraft über der Zeit für einen herkömmlichen Gurtaufroller und einen erfindungsgemäßen Gurtaufroller aufgetragen sind.

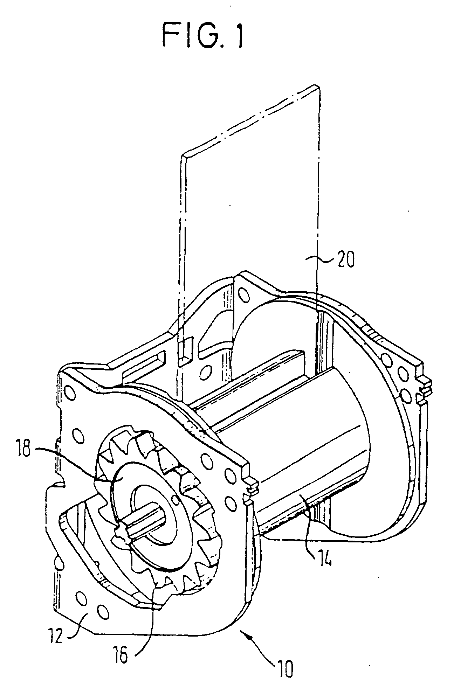

In Figur 1 ist perspektivisch ein erfindungsgemäßer Gurtaufroller gezeigt. Der Gurtaufroller 10 enthält ein Gehäuse 12, in welchem drehbar eine Gurtspule 14 gelagert ist. An einem axialen Ende der Gurtspule 14 ist eine Sperrscheibe 18 vorgesehen. Am Außenumfang der Sperrscheibe 18 ist eine Sperrverzahnung 16 ausgebildet, in die eine in Figur 1 nicht dargestellte Sperrklinke eingesteuert werden kann. Auf der Gurtspule 14 kann ein Sicherheitsgurt 20 aufgewickelt werden.

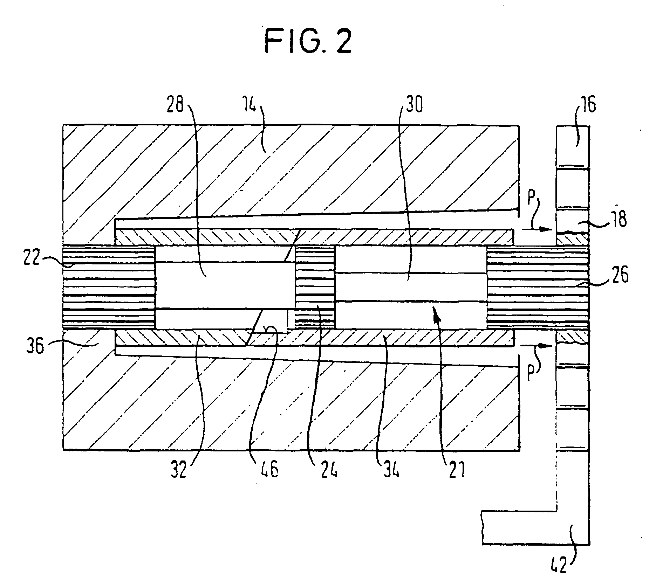

In Figur 2 ist in einem schematischen Querschnitt die Gurtspule 14 mit der Sperrscheibe 18 gezeigt. Im Inneren der Gurtspule befindet sich ein Torsionsstab 21, der aus einem ersten axialen Ende 22, einem Arretierbereich 24, einem zweiten axialen Ende 26 sowie einem ersten Abschnitt 28 zwischen dem ersten axialen Ende 22 und dem Arretierbereich 24 und einem zweiten Abschnitt 30'zwischen dem Arretierbereich 24 und dem zweiten axialen Ende 26 besteht. Der zweite Abschnitt 30 des Torsionsstabes hat einen kleineren Querschnitt als der erste Abschnitt 28. Das erste axiale Ende 22, das zweite axiale Ende 26 sowie der Arretierbereich 24 des Torsionsstabes sind mit einem Vielnutprofil versehen.

Das erste axiale Ende 22 des Torsionsstabes ist mittels des Vielnutprofils drehfest mit der Gurtspule 14 verbunden. Das zweite axiale Ende 26 des Torsionsstabes ist drehfest mit der Sperrscheibe 18 verbunden.

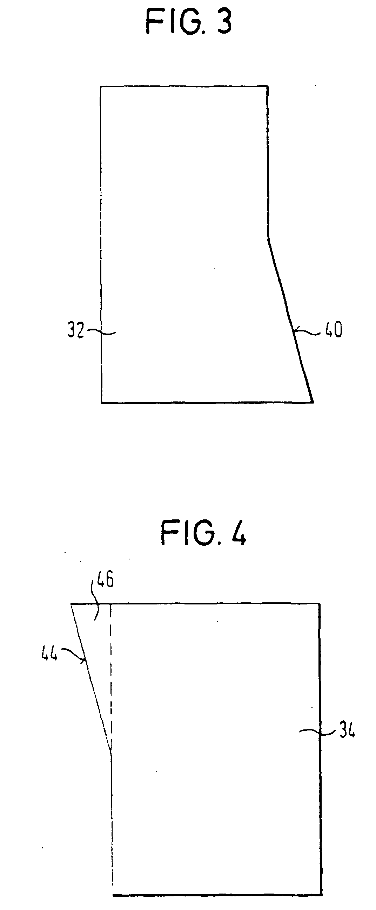

Im Inneren der Gurtspule sind außerdem eine Stellhülse 32 und eine Überbrückungshülse 34 angeordnet. Die beiden Hülsen sind in den Figuren 3 und 4 im abgewickelten Zustand gezeigt. Die Stellhülse 32 ist auf ihrer Innenseite mit einem Vielnutprofil versehen, das zu dem Vielnutprofil des ersten axialen Endes 22 des Torsionsstabes komplementär ist, und so auf das erste axiale Ende 22 des Torsionsstabes aufgeschoben, daß sie drehfest mit diesem verbunden ist und gleichzeitig an der Stirnwand 36 der Gurtspule 14 anliegt. Das dem zweiten axialen Ende 26 des Torsionsstabes zugewandte axiale Ende der Stellhülse 32 erstreckt sich so weit zum zweiten axialen Ende 26 des Torsionsstabes hin, daß es den Arretierbereich 24 gerade nicht berührt. Die dem zweiten axialen Ende 26 des Torsionsstabes zugewandte Stirnseite der Stellhülse 32 ist als Steuerkurve 40 ausgebildet.

Auch die Überbrückungshülse 34 ist auf ihrer Innenseite mit einem Vielnutprofil versehen, das zum Vielnutprofil des Arretierbereichs 24 und des zweiten axialen Endes 26 komplementär ist. In der in Figur 2 gezeigten Ausgangsstellung ist das bezüglich Figur 2 linke axiale Ende der Überbrückungshülse 34 drehfest auf dem Arretierbereich 24 angeordnet, während das bezüglich Figur 2 rechte axiale Ende der Überbrückungshülse 34 drehfest auf dem zweiten axialen Ende 26 des Torsionsstabes angeordnet ist. Die dem ersten axialen Ende 22 des Torsionsstabes zugewandte Stirnseite 44 der Überbrückungshülse 34 liegt an der Steuerkurve 40 der Stellhülse 32 an.

Wenn bei der gezeigten Ausgangsstellung der Überbrückungshülse 34 die in Figur 2 schematisch angedeutete Sperrklinke 42 in die Sperrverzahung 16 des Sperrades 18 eingesteuert wird, ist über das Sperrad 18 zunächst das zweite axiale Ende 26 des Torsionsstabes blockiert. Aufgrund des von der Überbrückungshülse 34 bereitgestellten hohen Torsionswiderstandsmomentes ist auch der Arretierbereich 24 drehfest mit dem zweiten axialen Ende 26 des Torsionsstabes gekoppelt; der zweite Bereich 30 erfährt (nahezu) keinerlei Belastung. Wenn nun bei blockiertem Sperrad 18 mittels des Gurtbandes 20 eine Belastung auf die Gurtspule 14 aufgebracht wird, führt dies zunächst ausschließlich zu einer Torsion des ersten Abschnittes 28 des Torsionsstabes. Bei dieser Verdrehung kommt es auch zu einer Verdrehung der Überbrückungshülse 34 relativ zur Stellhülse 32, da die Stellhülse 32 drehfest mit dem ersten axialen Ende 22 verbunden ist, während sich die Überbrückungshülse 34 zusammen mit dem zweiten axialen Ende 26 und dem Arretierbereich 24 des Torsionsstabes dreht. Bei dieser Drehung wird die dem ersten axialen Ende 22 des Torsionsstabes zugewandte Stirnseite 44 der Überbrückungshülse 34 von der Steuerkurve 40 der Stellhülse 32 in Richtung der Pfeile P bezüglich Figur 2 nach rechts verschoben. Bei zunehmender Verdrehung des ersten axialen Endes 22 relativ zum Arretierbereich 24 des Torsionsstabes wird die Überbrückungshülse 34 so weit nach rechts verschoben, daß sie nicht mehr in das Vielnutprofil des Arretierbereichs 24 eingreift. Diese Stellung, in der eine Verdrehung des Arretierbereichs 24 relativ zum zweiten axialen Ende 26 des Torsionsstabes möglich ist, wird als Freigabestellung bezeichnet. Damit das Entkuppeln zwischen dem Arretierbereich 24 und der Überbrückungshülse 34 gleichmäßig erfolgt, ist das Vielnutprofil auf der Innenseite der Überbrückungshülse 34 nur über einen Bereich ausgebildet, der über den gesamten Innenumfang dieselbe axiale Länge aufweist; in einem Bereich 46, der jenseits dieser axialen Länge liegt, ist kein Vielnutprofil vorgesehen.

Die in Figur 3 gezeigte Steuerkurve 40 zusammen mit der komplementären Stirnfläche 44, die in Figur 4 für die Überbrückungshülse 34 gezeigt ist, ist nur ein Beispiel für eine mögliche Gestaltung der Stellhülse 32 und der Überbrückungshülse 34. Die Steuerkurve kann mit einer größeren oder auch kleineren Steigung versehen sein. Es ist z.B. möglich, die Steuerkurve zu erhalten, indem eine mit dem Vielnutprofil auf der Innenseite versehene Hülse schräg durchgeschnitten wird, also in einem von 90° verschiedenen Winkel relativ zur Längsachse der Hülse. Wichtig ist nur, daß spätestens nach einer Umdrehung des Arretierbereichs 24 relativ zum ersten axialen Ende 22 des Torsionsstabes ein solcher axialer Vorschub von der Steuerkurve 40 bereitgestellt ist, daß die Überbrückungshülse 34 aus der Ausgangsstellung in die Freigabestellung überführt ist.

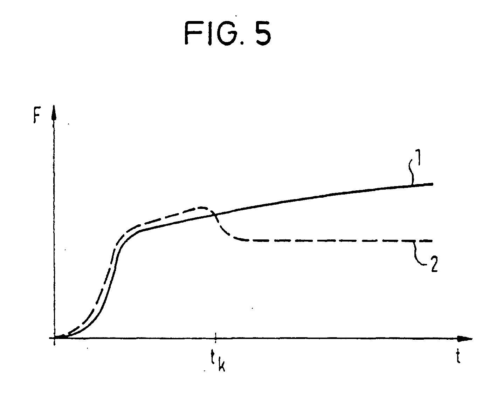

In Figur 5 ist ein Diagramm gezeigt, in welchem der Verlauf von Gurtbandabzugskraft F über der Zeit t für einen typischen Frontalaufprall eines Fahrzeugs gezeigt ist. Die mit einer durchgehenden Linie gezeigte Kurve 1 stellt den Verlauf bei einem herkömmlichen Gurtaufroller mit Kraftbegrenzung dar. Es ist zu sehen, daß die Gurtbandabzugskraft zuerst stark und nachfolgend mit geringerer Steigung ansteigt. Die gestrichelt dargestellte Kurve 2 zeigt den Verlauf der Gurtbandabzugskraft bei einem erfindungsgemäßen Gurtaufroller. Es ist zu sehen, daß bis zu einem Zeitpunkt tk die Kurven 1 und 2 parallel verlaufen. Ab dem Zeitpunkt tk kommt es jedoch beim erfindungsgemäßen Gurtaufroller zu einem Absinken der Gurtbandabzugskraft. Der Zeitpunkt tk repräsentiert den Zeitpunkt, an dem die Überbrückungshülse 34 von dem Arretierbereich 24 entkoppelt wird, so daß zusätzlich zum ersten Abschnitt 28 auch der zweite Abschnitt 30 des Torsionsstabes an der Verdrehung teilnimmt. Da der Querschnitt des zweiten Abschnittes 30 kleiner als derjenige des ersten Abschnittes 28 ist, kommt es zu einem Absinken der Gurtbandabzugskraft. Der Zeitpunkt tk entspricht genau dem Zeitpunkt, an dem der Fahrzeuginsasse in den entfalteten Gassack eintaucht. Durch das zu diesem Zeitpunkt auftretende Absinken der Gurtbandabzugskraft wird gewährleistet, daß die Gesamtbelastung des Oberkörpers des Fahrzeuginsassen annähernd konstant bleibt.

## Patentansprüche

1. Gurtaufroller für einen Fahrzeuginsassen-Sicherheitsgurt, mit einer in einem Gehäuse (12) drehbar gelagerten Gurtspule (14), einem Torsionsstab (21), der sich im Inneren der Gurtspule (14) erstreckt, mit seinem ersten axialen Ende (22) drehfest mit der Gurtspule (14) und mit seinem zweiten axialen Ende (22) drehfest mit einer Sperrscheibe (18) verbunden ist, und mit einer Sperrverzahnung (16) sowie einer lasttragenden Sperrklinke (42), die zum Blockieren der Gurtspule (14) in die Sperrverzahnung (16) einsteuerbar ist, wobei der Torsionsstab einen ersten Abschnitt (28) sowie einen zweiten Abschnitt (30) aufweist, dessen Querschnitt kleiner als derjenige des ersten Abschnittes (28) ist, wobei zwischen dem ersten und dem zweiten Abschnitt (28, 30) ein Arretierbereich (24) ausgebildet ist und wobei ein Überbrückungselement (34) vorgesehen ist, das von einer den zweiten Abschnitt des Torsionsstabes überbrückenden Ausgangsstellung in eine Freigabestellung überführt werden kann, in der der zweite Abschnitt des Torsionsstabes freigegeben ist, **dadurch gekennzeichnet, daß** auf dem ersten axialen Ende des Torsionsstabes drehfest eine Stellhülse (32) angeordnet ist, die eine dem zweiten axialen Ende (26) des Torsionsstabes zugewandte Stirnseite aufweist, die als Steuerkurve (40) ausgebildet ist, an der die dem ersten axialen Ende (22) des Torsionsstabes zugewandte Stirnseite (44) des Überbrückungselements (34) anliegt.

2. Gurtaufroller nach Anspruch 1, **dadurch gekennzeichnet, daß** die Steuerkurve (40) so ausgebildet ist, daß nach einer vorbestimmten Verdrehung des Arretierbereichs (24) relativ zum ersten axialen Ende (26) des Torsionsstabes das Überbrückungselement (34) derart weit zum zweiten axialen Ende (26) des Torsionsstabes hin verschoben ist, daß der Arretierbereich (24) nicht mehr in das Überbrückungselement (34) eingreift.

3. Gurtaufroller nach einem der vorhergehenden Ansprüche, **dadurch gekennzeichnet, daß** das erste axiale Ende (22) des Torsionsstabes mit einem Vielnut- oder Keilzahnprofil versehen ist und daß die Stellhülse (32) in ihrem Inneren mit einem komplementären Vielnut- bzw. Keilzahnprofil versehen ist.

4. Gurtaufroller für einen Fahrzeuginsassen-Sicherheitsgurt, mit einer in einem Gehäuse (12) drehbar gelagerten Gurtspule (14), einem Torsionsstab (21), der sich im Inneren der Gurtspule (14) erstreckt, mit seinem ersten axialen Ende (22) drehfest mit der Gurtspule (14) und mit seinem zweiten axialen Ende (22) drehfest mit einer Sperrscheibe (18) verbunden ist, und mit einer Sperrverzahnung (16) sowie einer lasttragenden Sperrklinke (42), die zum Blockieren der Gurtspule (14) in die Sperrverzahnung (16) einsteuerbar ist, wobei der Torsionsstab einen ersten Abschnitt (28) sowie einen zweiten Abschnitt (30) aufweist, dessen Querschnitt kleiner als derjenige des ersten Abschnittes (28) ist, wobei zwischen dem ersten und dem zweiten Abschnitt (28, 30) ein Arretierbereich (24) ausgebildet ist und wobei ein Überbrückungselement (34) vorgesehen ist, das von einer den zweiten Abschnitt des Torsionsstabes überbrückenden Ausgangsstellung in eine Freigabestellung überführt werden kann, in der der zweite Abschnitt des Torsionsstabes freigegeben ist, **dadurch gekennzeichnet, daß** an dem Überbrückungselement (34) ein Gewinde ausgebildet ist, in das ein Gegenstück derart eingreift, daß ein Überführen des Überbrückungselements (34) aus der Ausgangsstellung in die Freigabestellung möglich ist.

5. Gurtaufroller nach einem der vorhergehenden Ansprüche, **dadurch gekennzeichnet, daß** der Arretierbereich (24) und das zweite axiale Ende (26) des Torsionsstabes mit einem Vielnut- oder Keilzahnprofil versehen sind und daß das Überbrückungselement eine Überbrückungshülse (34) ist, die in ihrem Inneren mit einem komplementären Vielnut- bzw. Keilzahnprofil versehen ist.

## Claims

1. A belt retractor for a vehicle occupant seat belt, comprising a belt reel (14) rotatably mounted in a housing (12), a torsion bar (21) extending in the interior of said belt reel (14) and connected by its first axial end (22) non-rotatably to said belt reel (14) and by its second axial end (26) non-rotatably to a ratchet disk (18), and comprising a ratchet toothing (16) as well as a load-bearing ratchet pawl (42) capable of being brought into engagement with said ratchet toothing (16) to block said belt reel (14), said torsion bar having a first section (28) as well as a second section (30) the cross-section of which is smaller than that of said first section (28), an arresting portion (24) being configured between said first and second sections (28, 30), and a bypass element (34) being provided which can be transferred from a starting position bridging said second section of said torsion bar into a release position in which said second section of said torsion bar is released, **characterized in that** a positioning sleeve (32) is arranged non-rotatably on said first axial end of said torsion bar, said positioning sleeve comprising an end face facing said second axial end (26) of said torsion bar, which end face is configured as a control cam (40) with which the end face (44) of said bypass element (34) facing said first axial end (22) of said torsion bar is in contact.

2. The belt retractor as set forth in claim 1, **characterized in that** said control cam (40) is configured such that, after a predetermined rotation of said arresting portion (24) relative to said first axial end (22) of said torsion bar, said bypass element (34) is shifted towards said second axial end (26) of said torsion bar to such an extent that said arresting portion (24) no longer engages said bypass element (34).

3. The belt retractor as set forth in any of the preceding claims, **characterized in that** said first axial end (22) of said torsion bar is splined and that said positioning sleeve (32) is splined complementarily in its interior.

4. A belt retractor for a vehicle occupant seat belt, comprising a belt reel (14) rotatably mounted in a housing (12), a torsion bar (21) extending in the interior of said belt reel (14) and connected by its first axial end (22) non-rotatably to said belt reel (14) and by its second axial end (26) non-rotatably to a ratchet disk (18), and comprising a ratchet toothing (16) as well as a load-bearing ratchet pawl (42) capable of being brought into engagement with said ratchet toothing (16) to block said belt reel (14), said torsion bar having a first section (28) as well as a second section (30) the cross-section of which is smaller than that of said first section (28), an arresting portion (24) being configured between said first and second sections (28, 30), and a bypass element (34) being provided which can be transferred from a starting position bridging said second section of said torsion bar into a release position in which said second section of said torsion bar is released, **characterized in that** a thread is configured on said bypass element (34) which is engaged by a counterpiece such that said bypass element (34) can be transferred from said starting position into said release position.

5. The belt retractor as set forth in any of the preceding claims, **characterized in that** said arresting portion (24) and said second axial end (26) of said torsion bar are splined and that said bypass element is a bypass sleeve (34) splined complementarily in its interior.

## Revendications

1. Enrouleur de ceinture pour une ceinture de sécurité pour passager d'un véhicule, comportant une bobine de ceinture (14) montée en rotation dans un boîtier (12), une barre de torsion (21) qui s'étend à l'intérieur de la bobine de ceinture (14), qui est reliée solidaire en rotation à la bobine de ceinture (14) par sa première extrémité (22) axiale et à un disque d'arrêt (18) par sa deuxième extrémité (26) axiale, et comprenant une denture d'arrêt (16) ainsi qu'un cliquet d'arrêt (42) qui peut porter de la charge, qui peut être engagée dans la denture d'arrêt (16) pour bloquer la bobine de ceinture (14), la barre de torsion présentant un premier tronçon (28) ainsi qu'un deuxième tronçon (30) dont la section transversale est inférieure à celle du premier tronçon (28), une zone de blocage (24) étant réalisée entre les premier et deuxième tronçons (28, 30), et un élément de pontage (34) étant prévu, lequel peut être amené depuis une position initiale pontant le deuxième tronçon de la barre de torsion jusque dans une position de libération dans laquelle le deuxième tronçon de la barre de torsion est libéré, **caractérisé en ce que** sur la première extrémité axiale de la barre de torsion est agencée une douille de réglage solidaire en rotation, laquelle présente une face frontale tournée vers la deuxième extrémité (26) axiale de la barre de torsion, qui est réalisée sous forme de came de commande (40) sur laquelle est appliquée la face frontale (44) de l'élément de pontage (34) qui est tournée vers la première extrémité (22) axiale de la barre de torsion.

2. Enrouleur de ceinture selon la revendication 1, **caractérisé en ce que** la came de commande (40) est réalisé de telle sorte qu'après une rotation prédéterminée de la zone de blocage (24) par rapport à la première extrémité (22) axiale de la barre de torsion, l'élément de pontage (34) est déplacé aussi loin par rapport à la deuxième extrémité (26) que la zone de blocage (24) ne s'engage plus dans l'élément de pontage (34).

3. Enrouleur de ceinture selon l'une quelconque des revendications précédentes, **caractérisé en ce que** la première extrémité (22) axiale de la barre de torsion est pourvue d'un profil cannelé et **en ce que** la douille de réglage (32) est cannelée de manière complémentaire dans son intérieur.

4. Enrouleur de ceinture pour une ceinture de sécurité pour passager d'un véhicule, comportant une bobine de ceinture (14) montée en rotation dans un boîtier (12), une barre de torsion (21) qui s'étend à l'intérieur de la bobine de ceinture (14), qui est reliée solidaire en rotation à la bobine de ceinture (14) par sa première extrémité (22) axiale et à un disque d'arrêt (18) par sa deuxième extrémité (26) axiale, et comprenant une denture d'arrêt (16) ainsi qu'un cliquet d'arrêt (42) qui peut porter de la charge, qui peut être engagée dans la denture d'arrêt (16) pour bloquer la bobine de ceinture (14), la barre de torsion présentant un premier tronçon (28) ainsi qu'un deuxième tronçon (30) dont la section transversale est inférieure à celle du premier tronçon (28), une zone de blocage (24) étant réalisée entre les premier et deuxième tronçons (28, 30), et un élément de pontage (34) étant prévu, lequel peut être amené depuis une position initiale pontant le deuxième tronçon de la barre de torsion jusque dans une position de libération dans laquelle le deuxième tronçon de la barre de torsion est libéré, **caractérisé en ce que** sur l'élément de pontage (34) est réalisé un filetage dans lequel s'engage un pendant de manière à permettre que l'élément de pontage (34) soit amené depuis la position initiale dans la position de libération.

5. Enrouleur de ceinture selon l'une quelconque des revendications précédentes, **caractérisé en ce que** la zone de blocage (24) et la deuxième extrémité (26) axiale de la barre de torsion est pourvue d'un profil cannelé et **en ce que** l'élément de pontage est une douille de pontage (34) dont l'intérieur est pourvu d'un profil cannelé complémentaire.
